# EUROPÄISCHE PATENTSCHRIFT

(11) **EP 1 585 905 B1**
(45) Veröffentlichungstag und Bekanntmachung des Hinweises auf die Patenterteilung: **29.07.2009**
(21) Anmeldenummer: 03789311.2
(22) Anmeldetag: 17.12.2003
(51) Int. Cl.: F16C 33/80, F16D 3/38, F16C 25/08

(54) **DICHTUNGSBAUGRUPPE FÜR EINE LAGERBÜCHSE**
GASKET UNIT FOR A BEARING BUSHING
MODULE D'ETANCHEITE POUR UN COUSSINET

(30) Priorität: 21.01.2003 DE 10302069
(43) Veröffentlichungstag der Anmeldung: 19.10.2005
(73) Patentinhaber: Schaeffler KG, 91074 Herzogenaurach (DE)
(72) Erfinder: PESCHKE, Harald, 90587 Veitsbronn (DE); JAUERNIG, Dieter, 91074 Herzogenaurach (DE); FICKERT, Thomas, 91555 Feuchtwangen (DE); GÖTZ, Siegfried, 91353 Hausen (DE)
(86) Internationale Anmeldenummer: PCT/EP2003/014383
(87) Internationale Veröffentlichungsnummer: WO 2004/065806

(56) Entgegenhaltungen:
- DE-A- 4 128 179
- DE-A- 4 408 831
- DE-U- 20 111 647
- US-A- 4 512 672
- US-A- 5 026 324
- US-A- 5 199 800
- US-A- 6 050 571
- US-B1- 6 183 369

## Beschreibung

### Gebiet der Erfindung

Die Erfindung betrifft eine Dichtungsbaugruppe für eine wälzgelagerte Zapfenlagerung in einer Lagerbüchse. Die Dichtungsbaugruppe ist insbesondere für Lagerbüchsen vorgesehen, die beispielsweise in dem Kardan-Gelenk einer Antriebswelle eingesetzt werden. Als Baugruppen ist dabei eine armierte, in eine Bohrung der Lagerbüchse drehfest eingesetzte Hauptdichtung vorgesehen sowie eine mit dem Zapfen drehfest verbundene, der Hauptdichtung axial vorgelagerte Vordichtung und eine zwischen der Hauptdichtung und einer Stirnseite der Wälzkörper angeordnete Tellerfeder. Die Hauptdichtung ist dazu über einen zylindrischen Abschnitt einer Armierung kraftschlüssig in die Bohrung der Lagerbüchse eingesetzt. An einem radial nach innen gerichteten Schenkel der Armierung ist zumindest eine Dichtlippe angelenkt, die in der Einbaulage dichtend an dem Zapfen abgestützt ist. Die Vordichtung überdeckt im eingebauten Zustand einen sich zwischen der Lagerbüchse und dem Zapfen bildenden Ringspalt. Die der Dichtungsbaugruppe weiterhin zugehörige Tellerfeder ist außenseitig an der Armierung der Hauptdichtung und innenseitig stirnseitig an den Wälzkörpern abgestützt.

### Hintergrund der Erfindung

Aus der DE 44 08 831 A1 ist eine Dichtungsbaugruppe bekannt, die zusätzlich zu den zuvor genannten einzelnen Bauteilen wie Hauptdichtung, Vordichtung und Tellerfeder zusätzlich eine Zwischendichtung umfasst. Diese ist mit einer Armierung versehen, welche sich stirnseitig an der Lagerbüchse abstützt und deren innerer zylindrischer Schenkel vom Dichtungsmaterial der Zwischendichtung umspritzt ist. Der äußere zylindrische Schenkel der Armierung greift spielbehaftet in eine Ringnut der Vordichtung. Nachteilig vergrößert diese bekannte Dichtungsbaugruppe den axialen Bauraum und erfordert einen vergrößerten Montageaufwand.

DE 41 28 179 A1 *zeigt eine Dichtungsanordnung, in der* die Hauptdichtung mit einer Armierung versehen *ist*, die endseitig in Richtung der Lagerbüchsenöffnung zeigend, nach außen abgekantet, an der Lagerbüchsen-Innenwand abgestützt ist. Diese Maßnahme gewährleistet eine vorteilhafte lagepositionierte Anordnung der Hauptdichtung in der Lagerbüchse. Damit verbunden stellt sich eine definierte, axiale Abstützkraft der Tellerfeder ein, die zwischen der Hauptdichtung und den Wälzkörpern der Zapfenlagerung angeordnet ist. Weiterhin gewährleistet die erfindungsgemäße Einbaulage der Hauptdichtung, dass die der Hauptdichtung zugehörige Dichtlippe eine definierte Einbaulage an der Mantelfläche des Zapfens einnimmt. Die Hauptdichtung *umfasst* zwei axial beabstandete Dichtlippen, die an dem Zapfen so dichtend abgestützt sind, dass eine der Dichtlippen ein einem Zapfenabschnitt kleineren Durchmessers beziehungsweise an einer Übergangsphase zwischen dem Zapfenabschnitt kleineren Durchmessers und einem Zapfenabschnitt größeren Durchmessers *anliegt*. Eine vergrößerte Abstützkraft der Dichtlippe, die der Vordichtung zugeordnet ist, wird mittels einer Schlauchfeder erzielt, die in einer äußeren umlaufenden Ringnut der Dichtlippe eingesetzt, diese mit einer vergrößerten Radialkraft an den Zapfen presst. Die drehfest auf dem Zapfen angeordnete Vordichtung ist außenseitig formschlüssig mit einem radial abgesetzten Endabschnitt der Lagerbüchse verbunden, wobei diese Bauteile gemeinsam ein Dichtungslabyrinth bilden. Weiterhin umfasst die Vordichtung eine Dichtlippe, die in der Einbaulage der Armierung der Hauptdichtung innenseitig zugeordnet ist.

Wie aus DE 41 28 179 A1 hervorgeht, begrenzen die Dichtlippe die der Hauptdichtung zugeordnet ist und die Hauptdichtung einen Sammelraum für Wasser und Schmutzteilchen.

### Zusammenfassung der Erfindung

Der vorliegenden Erfindung liegt die Aufgabe zu Grunde, eine Dichtungsbaugruppe mit einem verringerten Bauteileumfang zu schaffen, die einen verringerten Dichtlippenverschleiß aufweist sowie die Dichtwirkung bezüglich Schmierstoffaustritt bzw. den Eintritt von Verunreinigungen optimiert sowie eine optimale Schmierung der Zapfenlagerung ermöglicht.

Die Aufgabe ist nach dem Gegenstand des Anspruches 1 gelöst.

Die erfindungsgemäße Dichtungsbaugruppe schließt einen ringartig gestalteten, groß dimensionierten Zwischenraum ein, der sich zwischen der Hauptdichtung und der Vordichtung einstellt. Der vorteilhaft als ein Schmierstoffreservoir nutzbare Zwischenraum ermöglicht eine Lebensdauerschmierung der Zapfenlagerung.

Die Einbaulage der Dichtlippen, d. h. die weitestgehend symmetrische Anordnung der dreieckförmigen vorderen Dichtlippe sowie die schräg ausgerichtete weitere Dichtlippe bewirkt eine schräg verlaufende Nut zwischen den Dichtlippen mit einem gerundeten Nutauslauf. Die Nut ermöglicht eine gewünschte hohe Elastizität bzw. unabhängige Abstützung der Dichtlippen an der Mantelfläche des Zapfens. Weiterhin bildet diese Nut gleichzeitig ein weiteres gewünschtes Reservoir für den Schmierstoff der Zapfenlagerung.

Eine weitere Ausgestaltung der Vordichtung sieht vor, dass deren Dichtlippe in der Einbaulage kraftschlüssig innenseitig an der Armierung der Hauptdichtung abgestützt ist. Da der endseitig radial nach außen gerichtete Abschnitt der Armierung eine konisch gestaltete Einbauschräge bildet, wird dadurch die Montage der Vordichtung vereinfacht. Die Einbauschräge ermöglicht, dass die Dichtlippe die Einbaulage ungehindert einnehmen kann. Die Dichtlippe der Vordichtung hat insbesondere die Aufgabe, negative Einflüsse, wie den Eintritt von Verunreinigungen oder Feuchtigkeit in den Innenraum der Lagerbüchse, der Zapfenlagerung wirksam zu unterbinden.

Für Lagerbüchsen, für die eine Nachschmierung gewährleistet werden soll, *ist* die Dichtlippe der Vordichtung mit zumindest einer vorzugsweise axial verlaufenden Nut im Bereich der Kontaktzone zu versehen. Bedarfsabhängig kann die Vordichtung mehrere umfangsverteilt angeordnete Nuten aufweisen, zur Vermeidung einer geschlossenen linienberührten Abstützung der Vordichtung an der Armierung der Hauptdichtung.

Die erfindungsgemäßen Maßnahmen verringern in vorteilhafter Weise den Verschleiß der Dichtlippen und verbessern gleichzeitig die Dichtwirkung der Dichtungsbaugruppe hinsichtlich eines die Lebensdauer unmittelbar nachteilig beeinflussenden Schmierstoffaustritts. Die Erfindung zeichnet sich weiterhin durch eine vorteilhafte geringe axiale Vorspannung der Wälzlagerung aus durch eine Relaxation der Elastomerdichtung, d. h. dem Werkstoff der Hauptdichtung. In vorteilhafter Weise ist erfindungsgemäße die zwischen der Hauptdichtung und den Wälzkörpern angeordnete Tellerfeder außenseitig nahezu unmittelbar an der Armierung der Hauptdichtung abgestützt, so dass sich in Verbindung mit der definierten Einbaulage der Hauptdichtung eine eng tolerierte Axialkraft bzw. Vorspannung auf die Wälzkörper einstellen kann. Der erfindungsgemäße, drei Bauteile umfassende Aufbau der Dichtungsbaugruppe bietet weiterhin einen Montagevorteil, da diese Bauteile eine automatisierte, zumindest aber eine semiautomatische Montage ermöglichen, wodurch sich gleichzeitig ein Kostenvorteil einstellt.

Weitere vorteilhafte Ausgestaltungen der Erfindung sind Gegenstand der abhängigen Ansprüche.

In vorteilhafter Weise ist die Armierung der Hauptdichtung, zur Erzielung einer definierten Lageposition, endseitig in eine Ringnut der Lagerbüchse verrastet. Alternativ dazu bietet es sich an, im Bereich des zylindrischen Abschnitts der Armierung eine umlaufende Durchsetzung bzw. umfangsverteilt angeordnete radial nach außen gerichtete Noppen vorzusehen, die formschlüssig in eine Ringnut an der Innenwandung der Lagerbüchse eingreifen.

Die Armierung der Hauptdichtung weist erfindungsgemäß weiterhin an dem zu den Wälzkörpern weisenden Ende einen radial nach innen gerichteten, umlaufenden Schenkel auf, der zumindest wälzkörperseitig von dem elastischen Dichtungswerkstoff der Hauptdichtung umspritzt ist. An den elastischen Dichtungswerkstoff, der das freie, nach innen gerichtete Ende des Schenkels umschließt, sind weiterhin die zwei an dem Lagerzapfen abgestützten Dichtlippen angefügt. Der Dichtungswerkstoff, der den Schenkel der Armierung außenseitig abdeckt, erstreckt sich stirnseitig außerdem radial bis über die Mantelfläche des zylindrischen Abschnitts der Armierung. Diese Maßnahme bewirkt eine Abdichtung eines Dichtspaltes, der sich zwischen der Armierung und der Innenwandung der Lagerbüchse einstellt. Das sich einstellende Überstandsmaß, das Differenzmaß zwischen dem Außendurchmesser der Armierung und dem Außendurchmesser des vom Dichtungswerkstoff umspritzten Schenkels an der Außenseite bewirkt eine gewünschte kraftschlüssige Anlage des Dichtungswerkstoffs an der Innenwandung der Lagerbüchse im eingebauten Zustand.

Die erfindungsgemäß ausschließlich aus einem elastischen Werkstoff hergestellte Vordichtung ist drehfest an dem Zapfen angeordnet. Dazu ist der Zapfen vorteilhaft gestuft, so dass die Vordichtung an einem Abschnitt des Zapfens positioniert ist, der den Durchmesser des Abschnittes übertrifft, an dem die Dichtlippen der Hauptdichtung abgestützt sind.

Die Gestaltung der Vordichtung umfasst eine axial ausgerichtete, U-förmige Aufnahme, in die der radial abgesetzte Endabschnitt der Lagerbüchse eingreift. Die Aufnahme der Vordichtung ist außenseitig von einem Bord und innenseitig von der Dichtlippe der Vordichtung begrenzt.

Zur Bildung eines Dichtungslabyrinths bildet der Bord der Vordichtung endseitig einen radial nach innen gerichteten Ansatz, welcher im eingebauten Zustand formschlüssig in eine Umlaufnut der Lagerbüchse im radial abgesetzten Endabschnitt eingreift.

Die Ausgestaltung der ringförmig gestalteten Vordichtung sieht weiterhin vor, dass diese auf der von der Hauptdichtung abgewandten Seite einen axialen Bord einschließt, der in der Einbaulage der Vorrichtung kraftschlüssig dichtend an einer Schulter des Zapfens abgestützt ist. Diese Maßnahme verbessert die Abdichtung der Vordichtung gegenüber dem Zapfen und vermeidet damit einen Schmierstoffaustritt aus der Lagerbüchse bzw. einen Eintritt von Verunreinigungen über den Dichtspalt, der sich zwischen der Vordichtung und dem Zapfen einstellt. Zur Erzielung einer bauraumoptimierten Gestaltung der Vordichtung weist dieser einen Außendurchmesser auf, der gleich oder kleiner dem Außendurchmesser der Lagerbüchse entspricht.

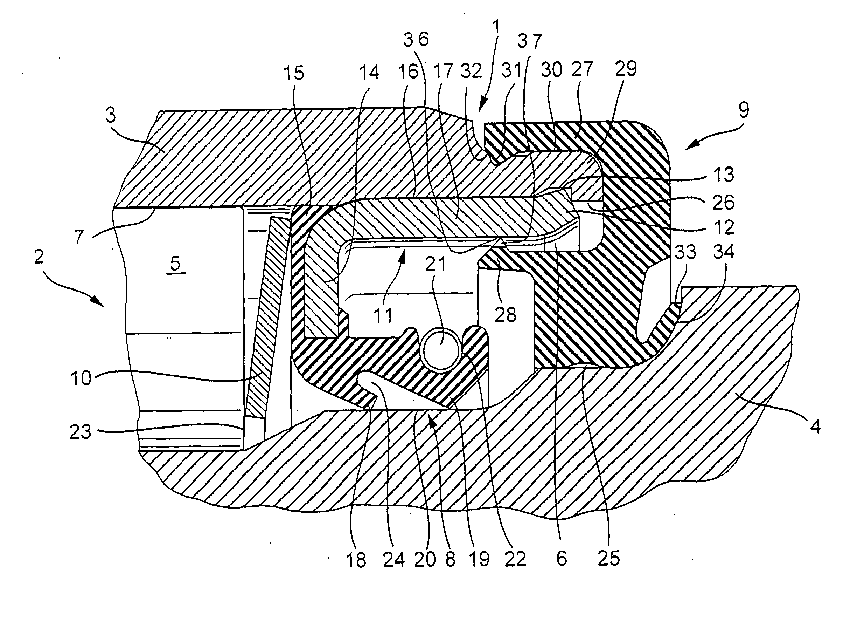

### Kurze Beschreibung der Zeichnung

Die Erfindung wird anhand der nachfolgenden Beschreibung der einzigen Figur erläutert, die ein Ausführungsbeispiel der Erfindung darstellt.

### Detaillierte Beschreibung der Zeichnung

Die Figur zeigt den Aufbau einer erfindungsgemäßen Dichtungsbaugruppe 1, vorgesehen für eine Zapfenlagerung 2. Dabei ist eine Lagerbüchse 3 vorgesehen, in der ein Zapfen 4 über Wälzkörper 5 gelagert ist. Die topfförmig gestaltete Lagerbüchse 3 erstreckt sich axial über die Wälzkörper 5 und bildet einen Ringspalt 6, der radial außen von einer Innenwandung 7 der Lagerbüchse 3 und radial innen von dem Zapfen 4 begrenzt ist. Zur Abdichtung des Ringspaltes 6 dient die Dichtungsbaugruppe 1, bestehend aus den Bauteilen der Hauptdichtung 8, der Vordichtung 9 sowie der Tellerfeder 10. Die Hauptdichtung 8 wird gebildet durch eine Armierung 11, deren zylindrischer Abschnitt in der Einbaulage kraftschlüssig an der Innenwandung 7 der Lagerbüchse 3 abgestützt ist. Endseitig an dem zur Vordichtung 9 gerichteten Ende weist die Armierung 11 einen radial nach außen zeigenden Abschnitt 12 auf, der formschlüssig in eine Ringnut 13 der Lagerbüchse 3 verschnappt und damit eine definierte Lageposition der Vordichtung 8 sicherstellt.

Eine gezielte axiale Vorspannung der Wälzkörper 5 wird durch die Tellerfeder 10 bewirkt, welche innenseitig an einer Stirnseite 23 der Wälzkörper 5 und außenseitig an dem Dichtstoff 15 und damit mittelbar an dem Schenkel 14 der Armierung 11 abgestützt ist. An dem zur Tellerfeder 10 gerichteten Ende bildet die Armierung 11 einen radial nach innen gerichteten Schenkel 14, welcher tellerfederseitig von einem elastischen Dichtstoff 15 ganzflächig umspritzt ist. Dabei erstreckt sich der Dichtstoff 15 außenseitig begrenzt radial über den Außendurchmesser der Armierung 11 und bewirkt damit eine Abdichtung eines Dichtspaltes 16 zwischen der Innenwandung 7 und dem zylindrischen Abschnitt 17 der Armierung 11. An dem freien Ende des Schenkels 14 weist die Hauptdichtung 8 zwei Dichtlippen 18, 19 auf, die axial beabstandet, an einem Abschnitt 20 gleichen Durchmessers des Zapfens 4 kraftschlüssig und dichtend anliegen. Die endseitige Dichtlippe 19 zeigt ein dreieckförmiges Querschnittsprofil, welches in der Einbaulage weitestgehend symmetrisch ausgerichtet linienberührt an dem Abschnitt 20 des Zapfens 4 abgestützt ist. Zur Erzielung einer verstärkten Anpresskraft ist die Dichtlippe 19 außenseitig von einer Schlauchfeder 21 umschlossen, welche in eine Ringnut 22 der Dichtlippe 19 eingebracht ist. Die weitere Dichtlippe 18 ist von dem Schenkel 14 ausgehend, unter einem Anstellwinkel schräg in Richtung einer Symmetrieachse des Zapfens 4 ausgerichtet und bildet ein rechteckförmiges Querschnittsprofil, wobei dieses mit einer Außenkante an dem Abschnitt 20 des Zapfens 4 abgestützt ist.

Zwischen den Dichtlippen 18, 19 bildet sich eine schräg verlaufende Nut 24 mit einem gerundeten Nutgrund. Die Nut 24 verbessert zum einen eine gewünschte Elastizität der Dichtlippen 18, 19 und damit eine voneinander getrennte Wirkungsweise. Weiterhin ist die Nut 24 als ein Schmierstoffreservoir für die Zapfenlagerung 2 nutzbar.

Die ausschließlich aus einem Dichtstoff hergestellte Vordichtung 9 ist kraftschlüssig auf dem Abschnitt 25 des Zapfens 4 angeordnet, dessen Durchmesser den Durchmesser des Abschnittes 20 übertrifft. Die Vordichtung 9 bildet eine axial ausgerichtete, in Richtung der Lagerbüchse 3 zeigende Ausnehmung 26. Radial außenseitig wird die Ausnehmung 26 durch den Bord 27 und innenseitig von der Dichtlippe 28 begrenzt. Ein radial abgesetzter Endabschnitt 29 der Lagerbüchse 3 ist in die Ausnehmung 26 der Vordichtung 9 eingepasst, wobei der Bord 27 der Vordichtung 9 kraftschlüssig an der Außenkontur des Endabschnittes 29 anliegt. Zur Bildung eines Dichtungslabyrinths 30 zwischen dem Endabschnitt 29 und dem Bord 27 der Vordichtung 9 ist an dem freien Ende von dem Bord 27 innenseitig ein radial nach innen gerichteter Ansatz 31 vorgesehen, welcher in eine Umlaufnut 32 des Endabschnittes 29 verrastet.

Die Dichtlippe 28 der Vordichtung 9 ist der Armierung 11 der Hauptdichtung 8 zugeordnet. Zur Erzielung einer vereinfachten Nachschmierung der Zapfenlagerung 2 ist die Dichtlippe 28 mit zumindest einer axial verlaufenden Nut 37 im Bereich der Kontaktzone 36 versehen, die einen vereinfachten Schmierstoffeintritt in einen axial von der Vordichtung 9 und der Hauptdichtung 8 begrenzten Zwischenraum 35 ermöglicht, der als Schmierstoffreservoir nutzbar ist. Der endseitig radial nach außen abgewinkelte Abschnitt 12 der Armierung 11 ermöglicht eine zerstörungsfreie Montage der Vordichtung 9 und der zugehörigen Dichtlippe 28. Die Vordichtung 9 umfasst weiterhin einen Bord 33 auf der von der Hauptdichtung 8 abgewandten Seite, welcher im eingebauten Zustand kraftschlüssig und dabei dichtend an einer Schulter 34 des Zapfens 4 abgestützt ist.

### Bezugszahlen

- 1: Dichtungsbaugruppe
- 2: Zapfenlagerung
- 3: Lagerbüchse
- 4: Zapfen
- 5: Wälzkörper
- 6: Ringspalt
- 7: Innenwandung
- 8: Hauptdichtung
- 9: Vordichtung
- 10: Tellerfeder
- 11: Armierung
- 12: Abschnitt
- 13: Ringnut
- 14: Schenkel
- 15: Dichtstoff
- 16: Dichtspalt
- 17: Abschnitt
- 18: Dichtlippe
- 19: Dichtlippe
- 20: Abschnitt
- 21: Schlauchfeder
- 22: Ringnut
- 23: Stirnseite
- 24: Nut
- 25: Abschnitt
- 26: Ausnehmung
- 27: Bord
- 28: Dichtlippe
- 29: Endabschnitt
- 30: Dichtungslabyrinth
- 31: Ansatz
- 32: Umlaufnut
- 33: Bord
- 34: Schulter
- 35: Zwischenraum
- 36: Kontaktzone
- 37: Nut

## Patentansprüche

1. Dichtungsbaugruppe (1) für eine wälzgelagerte Zapfenlagerung (2) in einer Lagerbüchse (3), insbesondere für eine Gelenkkreuzbüchse, umfassend eine armierte, in eine Bohrung der Lagerbüchse (3) drehfest eingesetzte Hauptdichtung (8), eine mit dem Zapfen (4) drehfest verbundene, der Hauptdichtung (8) axial vorgelagerte Vordichtung (9) sowie eine zwischen der Hauptdichtung (8) und einer Stirnseite (23) der Wälzkörper (5) angeordnete Tellerfeder (10), wobei,
- die Hauptdichtung (8) über einen zylindrischen Abschnitt (17) der Armierung (11) kraftschlüssig in die Bohrung, an einer Innenwandung (7) der Lagerbüchse (3) eingepresst ist und an einem radial nach innen gerichteten Schenkel (14) der Armierung (11) zumindest eine Dichtlippe (18, 19) aufweist, welche dichtend an dem Zapfen (4) abgestützt ist;
- die Vordichtung (9) einen Ringspalt (6) zwischen der Lagerbüchse (3) und dem Zapfen (4) überdeckt;
- die Tellerfeder (10) außenseitig an einem von einem Dichtstoff (15) umspritzten Bereich der Armierung (11) der Hauptdichtung (8) und innenseitig an einer Stirnseite (23) der Wälzkörper (5) abgestützt ist,
- in einer Einbaulage die Hauptdichtung (8) über einen endseitig abgewinkelten, an der Innenwandung (7) der Lagerbüchse (3) abgestützten Abschnitt (12) der Armierung (11) lagepositioniert ist
- die Hauptdichtung (8) zwei axial beabstandete Dichtlippen (18, 19) einschließt,
- die erste der Vordichtung (9) zugewandte Dichtlippe (19) außenseitig von einer Schlauchfeder (21) umschlossen ist und
- die formschlüssig mit der Lagerbüchse (3) im Bereich eines radial abgesetzten Endabschnitts (29) verbundene, ein Dichtungslabyrinth (30) bildende Vordichtung (9) eine Dichtlippe (28) einschließt,
**dadurch gekennzeichnet, *dass*** die zwei axial beabstandete Dichtlippen *(18, 19)* gemeinsam an einem Abschnitt (20) gleichen Durchmessers des Zapfens (4) abgestützt sind, wobei die Dichtlippe (28) des Dichtungslabyrinths (30) an der Armierung (11) der Hauptdichtung (8) innenseitig abgestützt ist und die Dichtlippe (28) der Vordichtung (9) im Bereich einer Kontaktzone (36) zumindest eine axial verlaufende Nut (37) aufweist.

2. Dichtungsbaugruppe nach Anspruch 1, wobei der endseitige Abschnitt (12) der Armierung (11) formschlüssig in eine Ringnut (13) der Lagerbüchse (3) verrastet.

3. Dichtungsbaugruppe nach Anspruch 1, bei der der wälzkörperseitig radial nach innen ausgerichtete Schenkel (14) der Armierung (11) stirnseitig auf der zur Tellerfeder (10) gerichteten Seite von einem elastischen Dichtstoff (15) umspritzt ist.

4. Dichtungsbaugruppe nach Anspruch 3, wobei der stirnseitig den Schenkel (14) überdeckende Dichtstoff (15) sich radial über die Außenkontur des zylindrischen Abschnitts (17), die Mantelfläche der Armierung (11) erstreckt und damit in der Einbaulage der Hauptdichtung (8) einen Dichtspalt (16) abdichtet, welcher sich zwischen der Innenwandung (9) der Lagerbüchse (3) und dem zylindrischen Abschnitt (17) der Armierung (11) einstellt.

5. Dichtungsbaugruppe nach Anspruch 1, wobei die von der Schlauchfeder (21) umschlossene Dichtlippe (19) der Hauptdichtung (8) ein dreieckförmiges und die zugehörige weitere Dichtlippe (18) ein rechteckförmig gestaltetes Querschnittsprofil aufweist.

6. Dichtungsbaugruppe nach Anspruch 5, deren Dichtlippen (18, 19) von einer schräg verlaufenden Nut (24) getrennt sind, die einen gerundeten Auslauf bildet.

7. Dichtungsbaugruppe nach Anspruch 6, wobei die Nut (24) als ein Schmierstoffreservoir für die Zapfenlagerung (2) vorgesehen ist.

8. Dichtungsbaugruppe nach Anspruch 1, deren ausschließlich aus einem Dichtstoff (15) bzw. aus einem elastischen Werkstoff hergestellte Vordichtung (9) an einem Abschnitt (25) des Zapfens (4) positioniert ist, der den Durchmesser des Abschnitts (20) des Zapfens (4) übertrifft, an dem die Dichtlippen (18, 19) abgestützt sind.

9. Dichtungsbaugruppe nach Anspruch 1, wobei in der Einbaulage der radial abgesetzte Endabschnitt (29) der Lagerbüchse (3) in eine axial ausgerichtete, U-förmige Aufnahme (26) der Vordichtung (9) eingreift, die außenseitig von einem Bord (27) und innenseitig von der Dichtlippe (28) der Vordichtung (9) begrenzt ist.

10. Dichtungsbaugruppe nach Anspruch 9, deren Vordichtung (9) endseitig an dem Bord (27) einen radial nach innen gerichteten Ansatz (31) aufweist, der mit einer Umlaufnut (32) des Endabschnitts (29) der Lagerbüchse (3) verrastet.

11. Dichtungsbaugruppe nach Anspruch 8, wobei die Vordichtung (9) auf der von der Hauptdichtung (8) abgewandten Seite einen axialen Bord (33) einschließt, der in einer Einbaulage an einer Schulter (34) des Zapfens (4) abgestützt ist.

12. Dichtungsbaugruppe nach Anspruch 8, wobei ein Außendurchmesser der Lagerbüchse (3) gleich oder größer dem Außendurchmesser der Vordichtung (9) ausgelegt ist.

## Claims

1. Gasket assembly (1) for a roller-mounted journal mounting (2) in a bearing bush (3), in particular for a universal joint bush, comprising a reinforced main gasket (8) which is inserted into a hole of the bearing bush (3) in a rotationally fixed manner, a preliminary gasket (9) which is connected to the journal (4) in a rotationally fixed manner and is positioned axially in front of the main gasket (8), and a disc spring (10) which is arranged between the main gasket (8) and an end side (23) of the rolling bodies (5),
- the main gasket (8) being pressed non-positively via a cylindrical section (17) of the reinforcement (11) into the hole on an inner wall (7) of the bearing bush (3) and having at least one sealing lip (18, 19) on a radially inwardly directed limb (14) of the reinforcement (11), which sealing lip (18, 19) is supported sealingly on the journal (4);
- the preliminary gasket (9) covering an annular gap (6) between the bearing bush (3) and the journal (4);
- the disc spring (10) being supported on the outside on a region of the reinforcement (11) of the main gasket (8), which region is encapsulated by injection moulding with a sealant, and on the inside on an end side (23) of the rolling bodies (5),
- in an installation position, the main gasket (8) being positioned via a section (12) of the reinforcement (11), which section (12) is angled away on the end side and is supported on the inner wall (7) of the bearing bush (3),
- the main gasket (8) including two sealing lips (18, 19) which are spaced apart axially,
- the first sealing lip (19) which faces the preliminary seal (9) being enclosed on the outside by a hose spring (21), and
- the preliminary gasket (9) including a sealing lip (28), which preliminary gasket (9) is connected positively to the bearing bush (3) in the region of a radially recessed end section (29) and forms a sealing labyrinth (30),
**characterized in that** the two sealing lips (18, 19) which are spaced apart axially are supported jointly on a section (20) of identical diameter of the journal (4), the sealing lip (28) of the sealing labyrinth (30) being supported on the inside on the reinforcement (11) of the main gasket (8), and the sealing lip (28) of the preliminary seal (9) having at least one axially extending groove (37) in the region of a contact zone (36).

2. Gasket assembly according to Claim 1, the end-side section (12) of the reinforcement (11) latching positively into an annular groove (13) of the bearing bush (3).

3. Gasket assembly according to Claim 1, in which that limb (14) of the reinforcement (11) which is oriented radially to the inside on the rolling-body side is encapsulated by injection moulding with an elastic sealant (15) on the end side on the side which is directed towards the disc spring (10).

4. Gasket assembly according to Claim 3, the sealant (15) which covers the limb (14) on the end side extending radially over the outer contour of the cylindrical section (17), the circumferential face of the reinforcement (11), and therefore sealing a sealing gap (16) in the installation position of the main gasket (8), which sealing gap (16) is produced between the inner wall (9) of the bearing bush (3) and the cylindrical section (17) of the reinforcement (11).

5. Gasket assembly according to Claim 1, that sealing lip (19) of the main gasket (8) which is enclosed by the hose spring (21) having a triangular cross-sectional profile and the associated further sealing lip (18) having a cross-sectional profile of rectangular design.

6. Gasket assembly according to Claim 5, the sealing lips (18, 19) of which are separated by an obliquely extending groove (24) which has a rounded runout.

7. Gasket assembly according to Claim 6, the groove (24) being provided as a lubricant reservoir for the journal mounting (2).

8. Gasket assembly according to Claim 1, the preliminary gasket (9) of which, which is produced exclusively from a sealant (15) or from an elastic material, is positioned on a section (25) of the journal (4) which exceeds the diameter of the section (20) of the journal (4), on which the sealing lips (18, 19) are supported.

9. Gasket assembly according to Claim 1, the radially recessed end section (29) of the bearing bush (3) engaging, in the installation position, into an axially oriented, U-shaped receptacle (26) of the preliminary gasket (9) which is delimited on the outside by a rim (27) and on the inside by the sealing lip (28) of the preliminary gasket (9).

10. Gasket assembly according to Claim 9, the preliminary gasket (9) of which, on the end side on the rim (27), has a radially inwardly directed projection (31) which latches with a circumferential groove (32) of the end section (29) of the bearing bush (3).

11. Gasket assembly according to Claim 8, the preliminary gasket (9) including, on the side which faces away from the main gasket (8), an axial rim (33) which, in an installation position, is supported on a shoulder (34) of the journal (4).

12. Gasket assembly according to Claim 8, an external diameter of the bearing bush (3) being designed to be equal to or greater than the external diameter of the preliminary gasket (9).

## Revendications

1. Module d'étanchéité (1) pour un support sur palier de tourillon (2) monté sur roulements dans un coussinet (3), en particulier pour un coussinet à croisillon, comprenant un joint d'étanchéité principal (8) renforcé, inséré de manière solidaire en rotation dans un alésage du coussinet (3), un préjoint (9) connecté de manière solidaire en rotation au tourillon (4) et monté axialement avant le joint d'étanchéité principal (8) ainsi qu'un ressort Belleville (10) disposé entre le joint d'étanchéité principal (8) et un côté frontal (23) du corps de roulement (5), dans lequel
- le joint d'étanchéité principal (8) est pressé par le biais d'une portion cylindrique (17) du renforcement (11) par engagement par force dans l'alésage, contre une paroi intérieure (7) du coussinet (3), et présente au niveau d'une branche (14) du renforcement (11) orientée radialement vers l'intérieur, au moins une lèvre d'étanchéité (18, 19), qui est supportée de manière hermétique contre le tourillon (4) ;
- le préjoint (9) recouvre une fente annulaire (6) entre le coussinet (3) et le tourillon (4);
- le ressort Belleville (10) est supporté du côté extérieur contre une région du renforcement (11) du joint d'étanchéité principal (8) surmoulée avec un matériau d'étanchéité (15) et du côté intérieur au niveau d'un côté frontal (23) du corps de roulement (5),
- dans une position de montage, le joint d'étanchéité principal (8) est positionné par le biais d'une portion (12) du renforcement (11) coudée à l'extrémité, supportée sur la paroi intérieure (7) du coussinet (3),
- le joint d'étanchéité principal (8) inclut deux lèvres d'étanchéité espacées axialement (18, 19),
- la première lèvre d'étanchéité (19) tournée vers le préjoint (9) est entourée du côté extérieur par un ressort en spirale (21) et
- le préjoint (9) connecté par engagement par correspondance géométrique avec le coussinet (3) dans la région d'une portion d'extrémité (29) radialement en retrait et formant un joint à labyrinthe (30), inclut une lèvre d'étanchéité (28),
**caractérisé en ce que** les deux lèvres d'étanchéité espacées axialement (18, 19) sont supportées en commun sur une portion (20) de même diamètre du tourillon (4), la lèvre d'étanchéité (28) du joint à labyrinthe (30) étant supportée du côté intérieur contre le renforcement (11) du joint d'étanchéité principal (8) et la lèvre d'étanchéité (28) du préjoint (9) présentant au moins une rainure s'étendant axialement (37) dans la région d'une zone de contact (36).

2. Module d'étanchéité selon la revendication 1, dans lequel la portion (12) du côté de l'extrémité du renforcement (11) est encliquetée par engagement par correspondance géométrique dans une rainure annulaire (13) du coussinet (3).

3. Module d'étanchéité selon la revendication 1, dans lequel la branche (14) du renforcement (11) orientée du côté du corps de roulement radialement vers l'intérieur est surmoulée du côté frontal du côté orienté vers le ressort Belleville (10) par un matériau d'étanchéité élastique (15).

4. Module d'étanchéité selon la revendication 3, dans lequel le matériau d'étanchéité (15) recouvrant du côté frontal la branche (14) s'étend radialement sur le contour extérieur de la portion cylindrique (17), la surface d'enveloppe du renforcement (11), et ferme ainsi hermétiquement, dans la position de montage du joint d'étanchéité principal (8), une fente d'étanchéité (16) qui s'établit entre la paroi intérieure (9) du coussinet (3) et la portion cylindrique (17) du renforcement (11).

5. Module d'étanchéité selon la revendication 1, dans lequel la lèvre d'étanchéité (19) du joint d'étanchéité principal (8) entourée par le ressort en spirale (21) présente un profil en section transversale de forme triangulaire et l'autre lèvre d'étanchéité associée (18) présente un profil en section transversale de forme rectangulaire.

6. Module d'étanchéité selon la revendication 5, dont les lèvres d'étanchéité (18, 19) sont séparées par une rainure s'étendant obliquement (24), qui forme une sortie arrondie.

7. Module d'étanchéité selon la revendication 6, dans lequel la rainure (24) est prévue sous forme de réservoir de lubrifiant pour le support sur palier de tourillon (2).

8. Module d'étanchéité selon la revendication 1, dont le préjoint (9) fabriqué exclusivement à partir d'un matériau d'étanchéité (15) ou à partir d'un matériau élastique, est positionné sur une portion (25) du tourillon (4) qui dépasse le diamètre de la portion (20) du tourillon (4) sur lequel sont supportées les lèvres d'étanchéité (18, 19).

9. Module d'étanchéité selon la revendication 1, dans lequel, dans la position de montage, la portion d'extrémité (29) radialement en retrait du tourillon (3) vient en prise dans un logement (26) du préjoint (9), en forme de U et orienté axialement, qui est limité du côté extérieur par un bord (27) et du côté intérieur par la lèvre d'étanchéité (28) du préjoint (9).

10. Module d'étanchéité selon la revendication 9, dont le préjoint (9) présente du côté de l'extrémité sur le bord (27) une formation (31) orientée radialement vers l'intérieur qui s'encliquète avec une rainure périphérique (32) de la portion d'extrémité (29) du tourillon (3).

11. Module d'étanchéité selon la revendication 8, dans lequel le préjoint (9) inclut du côté opposé au joint d'étanchéité principal (8) un bord axial (33) qui est supporté dans une position de montage contre un épaulement (34) du tourillon (4).

12. Module d'étanchéité selon la revendication 8, dans lequel un diamètre extérieur du coussinet (3) est supérieur ou égal au diamètre extérieur du préjoint (9).
